# EUROPÄISCHE PATENTSCHRIFT

(11) **EP 4 417 847 B1**
(45) Veröffentlichungstag und Bekanntmachung des Hinweises auf die Patenterteilung: **12.08.2026**
(21) Anmeldenummer: 24158709.6
(22) Anmeldetag: 20.02.2024
(51) Int. Cl.: F16L 5/14, F24F 1/32, F16L 59/12, H02G 3/22

(54) **WÄRMEÜBERTRAGER-WANDDURCHFÜHRUNG UND VERWENDUNG**
HEAT EXCHANGER WALL BUSHING, SHAPED PART AND USE
PASSAGE DE PAROI D'ÉCHANGEUR DE CHALEUR, UNE PIÈCE DE FORME ET UTILISATION

(30) Priorität: 20.02.2023 EP 23157640
(43) Veröffentlichungstag der Anmeldung: 21.08.2024
(73) Patentinhaber: DOYMA GmbH & Co, 28876 Oyten (DE)
(72) Erfinder: Fiedler, Arne, 28279 Bremen (DE); Straube, Florian, 28359 Bremen (DE); Müller, Philipp, 28832 Achim (DE); Richter, Ralph, 26871 Papenburg (DE)
(74) Vertreter: Eisenführ Speiser

(56) Entgegenhaltungen:
- DE-A1- 102009 033 187
- DE-A1- 19 838 040
- DE-U1- 202011 051 944
- US-A- 4 889 298
- US-A1- 2019 123 540

## Beschreibung

Die Erfindung betrifft eine Wärmeübertrager-Wanddurchführung zur oberirdischen Installation eines Wärmeübertrager-Systems mit mehreren Leitungen, wobei die Wanddurchführung zum Durchführen der Leitungen des Wärmeübertrager-Systems durch eine Öffnung eines Wandabschnitts eingerichtet ist. Bei den Leitungen kann es sich um wärmeführende Fluidleitungen oder auch Strom- oder Datenleitungen des Wärmeübertrager-Systems handeln.

Unter dem Begriff des Wärmeübertrager-Systems sind erfindungsgemäß Klimaanlagen, die im Inneren des Gebäudes eine Kühlwirkung erzeugen, und Heizanlagen, insbesondere Wärmepumpenanlagen, die im Inneren des Gebäudes eine Heizwirkung erzeugen, zu verstehen. Der Begriff Wärmeübertrager-System umfasst aber auch Nahwärme-, Fernwärme, Erdwärme- und Solarthermie-Systeme.

Die erfindungsgemäße Wärmeübertrager-Wanddurchführung eignet sich für eine Wanddurchführung zur oberirdischen Installation eines Wärmeübertrager-Systems mit mehreren Leitungen. Die Wärmeübertrager-Wanddurchführung kann aber auch grundsätzlich für abweichende Einsatzzwecke zur Durchführung von Leitungen verwendet werden, wie beispielsweise für eine Wallbox für Elektro-Pkw, Wasserleitungen und Stromleitungen oder als Hausausführung für die Versorgung weiterer Bauten wie Swimmingpool, Gartenhäuschen, Poolbar oder Werkzeug- sowie Geräteschuppen oder dergleichen.

Unter einer oberirdischen Installation wird eine Installation verstanden, die mindestens erdgleich der darüber erfolgt. Die Installation kann grundsätzlich durch eine Außenwand, einen Fußboden oder eine Bodenplatte erfolgen. Die Anordnung der Wärmeübertrager-Wanddurchführung erfolgt vorzugsweise horizontal, kann jedoch grundsätzlich auch schräg erfolgen.

Im Stand der Technik ist das Verlegen von Fluidleitungen für das Wärmeübertrager-System, beispielsweise zwischen Innengerät und Außengerät, durch das Erdreich bekannt. Die Begriffe Innengerät und Außengerät werden in der vorliegenden Anmeldung exemplarisch verwendet. Die Wärmeübertrager-Wanddurchführung gemäß der vorliegenden Erfindung eignet sich allgemein zur Durchführung von Leitungen eines Wärmeübertrager-Systems durch beliebige Wandabschnitte. Zu den Wärmepumpen gehören auch sogenannte Monoblockanlagen und Splitgeräte, welche ein Außen- und ein Innengerät aufweisen. Monoblockanlagen haben nur ein Gerät, dass gewöhnlich außen steht. Unter einem Innengerät ist für diese Systeme ein Gerät der Heizungsanlage innerhalb des Hauses, bspw. ein Heizkreisverteiler (geregelt oder ungeregelt) zu verstehen. Der Begriff Gerät setzt nicht voraus, dass ein Regelkreis in dem betreffenden Gerät vorhanden sein muss.

Daneben ist aber, gerade beim Nachrüsten solcher Wärmeübertrager-Systeme an Bestandsbauten, auch das nicht bodenberührte, oberirdische Verbinden des Außengeräts mit dem Innengerät bekannt, bei dem die Fluidleitungen durch eine Außenwand eines Gebäudes hindurch verlegt werden.

DE 20 2011 051944 U1 betrifft eine Wanddurchführung mit einem als Quader geformten Block aus Beton mit einer Vorderseite und einer Rückseite sowie mit wenigstens einer sich von der Vorderseite bis an die Rückseite erstreckenden Durchgangsöffnung im Block. Aus US 4 889 298 A ist eine modulare Wanddurchführung bekannt. DE 10 2009 033187 A1 betrifft eine Vorrichtung zur dichten Durchführung von Kabeln, Leitungen, oder dergleichen durch eine Wand oder ein Dach, mit einem Pressring aus elastischem Material. US 2019/123540 A1 betrifft eine Abdichtungsanordnung. DE 198 38 040 A1 betrifft eine Gebäudeanschlussvorrichtung für Versorgungsleitungen.

Es hat sich herausgestellt, dass in vielen Baustellensituationen die Fluidleitungen durch die Gebäude-Außenwand hindurchgeführt werden, wobei ein Spaltraum entsteht, und der verbliebene Spaltraum zwischen der Leitung und einer die Leitung umgebenden Wandfläche wird einfach mit geeignetem Bauschaum ausgefüllt. Solche Lösungen haben den Nachteil einer unzureichenden Abdichtung gegen Umgebungseinflüsse wie Feuchtigkeit, Kälte, Lärm, UV-Strahlung etc. Zudem wird als Nachteil gesehen, dass derartige Lösungen nicht vogelpicksicher sind.

Die Installation eines Wärmeübertrager-Systems erfordert das Zusammenspiel mehrerer Gewerke am Installationsort. So wird beispielsweise die Kernbohrung durch die Gebäudewand hindurch in der Regel nicht vom selben Installateur eingebracht wie das Wärmeübertrager-System selbst. Das Einhalten der relevanten Anforderungen und Randbedingungen, die sich aus der Gebäude- und Anlagentechnik ergeben und die üblicherweise in Lastenheften niedergeschlagen sind, können hierdurch nur erschwert erfüllt werden.

Es existieren zwar Dichtsysteme zum Einführen von medienführenden Leitungen in Gebäude hinein durch Wände hindurch. Diese sind aber bisweilen komplex aufgebaut und nur mit einem bestimmten Kostenrahmen erhältlich. Für die Verwendung im Zusammenhang mit den Fluidleitungen eines Wärmeübertrager-Systems sind diese Systeme daher nicht geeignet.

Nachteilig wirkt sich ferner aus, dass der Installateur eine hohe Teilanzahl mitführen muss und zum Teil eine Vielzahl von Durchbrüchen durch einen betreffenden Wandabschnitt vorzunehmen hat. Auf diese Weise ist der Installationsaufwand bei bestehenden Wanddurchführungen häufig hoch und damit personalintensiv.

Vor diesem Hintergrund lag der Erfindung die Aufgabe zugrunde, eine Wärmeübertrager-Wanddurchführung der eingangs genannten Art dahingehend weiterzubilden, dass die im Stand der Technik aufgefundenen Nachteile möglichst weitgehend behoben werden. Insbesondere soll eine Wärmeübertrager-Wanddurchführung angegeben werden, die einfach zu installieren ist und eine geringe Bauteilkomplexität aufweist.

Erfindungsgemäß wird die Aufgabe bei einer Wärmeübertrager-Wanddurchführung der eingangs genannten Art dadurch gelöst, dass die Wanddurchführung ein Formteil aufweist, welches in die Öffnung einsetzbar ist, wobei das Formteil einen Grundkörper aufweist mit einem ersten Endabschnitt und einem gegenüberliegenden zweiten Endabschnitt, und wobei der Grundkörper wenigstens zwei von dem ersten Endabschnitt zu dem zweiten Endabschnitt verlaufende Leitungs-Durchführungen aufweist, welche dazu eingerichtet sind, jeweils eine Leitung des Wärmeübertrager-Systems aufzunehmen, sowie eine Verschlusseinheit, welche zur Anlage an dem Wandabschnitt ausgebildet ist, wobei die Verschlusseinheit Durchgänge für die durch die Wanddurchführung hindurchzuführenden Leitungen aufweist, und wobei das Formteil aus einem geschäumten oder expandierten Material ausgebildet ist, wobei an dem zweiten Endabschnitt ein Verschlussflansch angeformt ist, welcher zur Anlage an dem Wandabschnitt gegenüber von der Verschlusseinheit ausgebildet ist.

Bei den Leitungs-Durchführungen handelt es sich vorzugsweise um Fluidleitungs-Durchführungen. Durch die Leitungs-Durchführungen kann aber auch beispielsweise in einer ersten Durchführung eine Fluidleitung geführt werden und in einer zweiten Durchführung eine elektrische Leitung oder eine Datenleitung.

Insoweit können zwei Wärmeübertrager-Wanddurchführungen vorgesehen sein, wobei durch jede der Wärmeübertrager-Wanddurchführungen mittels einer ersten Leitungs-Durchführung jeweils eine Fluidleitung des Wärmeübertrager-Systems geführt wird und mittels einer zweiten Leitungs-Durchführung eine weitere Leitung, bspw. eine Stromleitung oder Datenleitung. Gemäß einer Ausführungsform ist das Formteil ausschließlich durch den Grundkörper ausgebildet.

Durch die Ausbildung der Wärmeübertrager-Wanddurchführung aus einem Formteil und einer Verschlusseinheit erfolgt auf besonders einfache und kostengünstige Weise eine Wärmedämmung der durch den Wandabschnitt durchzuführenden Leitungen. Zur Wanddurchführung von beispielsweise zwei wärmeführenden Fluidleitungen werden lediglich zwei Teile benötigt, nämlich zum einen das Formteil und zum anderen die betreffende Verschlusseinheit. In einem montierten Zustand der Wärmeübertrager-Wanddurchführung ist die Verschlusseinheit mit dem Formteil an dem ersten Endabschnitt verbunden.

Dabei kann das Formteil auf einfache Weise und unmittelbar am Montageort, beispielsweise auf der Baustelle, mit einfachen Mitteln an die betreffende Dicke des Wandabschnitts durch Ablängen des Formteils angepasst werden. Durch die Funktionsintegration, die sich insbesondere in dem Formteil manifestiert, ist lediglich eine geringe Anzahl an Bauteilen zur Installation durch den Monteur mitzuführen. Insgesamt wird die Montage einer solchen Wärmeübertrager-Wanddurchführung deutlich erleichtert und kann somit schneller erfolgen. Das bedeutet mit anderen Worten, dass ein einziger Monteur dazu befähigt wird, in derselben Arbeitszeit eine höhere Anzahl an Wanddurchführungen zu installieren. Darüber hinaus kann auf vorteilhafte Weise auf ein Vergießen von Fluidleitungen und Bauteilen verzichtet werden, wodurch die Gesundheitsgefährdung für den Monteur sinkt und darüber hinaus die Wanddurchführung, ohne dass Trocknungszeiten abzuwarten sind, in einem einzigen Arbeitsgang installiert werden können. Mit anderen Worten erfolgt somit eine Funktionsintegration mittels des Formteils. Dieses übernimmt mehrere Funktionen, nämlich die Bereitstellung einer Wärmedämmung, einer Verspannmöglichkeit, einer Führung sowie einer Längenanpassbarkeit.

Durch die Ausbildung des Formteils aus einem geschäumten oder expandierten Material wird eine gute Wärmedämmung erreicht. Darüber hinaus erfolgt durch den Schaum auch eine elektrische Trennung der Außen- von den Innenbauteilen. Ferner ist das Gewicht eines solchen Bauteils gering. Ferner weist ein derartiges Formteil günstige Schallentkopplungseigenschaften auf. Im Übrigen lässt sich ein solches Schaumbauteil auf einfache Weise wie gewünscht Ablängen, sodass das Formteil eine Länge aufweisen kann, die größer ist, als typischerweise zu erwartende Wanddicken. Das ggf. vorhandene Übermaß des Formteils kann sodann wie gewünscht abgelängt werden. Vorzugsweise weist das Formteil schalldämpfende Eigenschaften und/oder schwingungsdämpfende Eigenschaften auf.

Erfindungsgemäß ist an dem zweiten Wandabschnitt ein Verschlussflansch angeformt, welcher zur Anlage an dem Wandabschnitt gegenüber der Verschlusseinheit ausgebildet ist. Grundkörper und Verschlussflansch sind dabei einstückig ausgebildet, insbesondere als ein gemeinsames Bauteil. Hierdurch wird die Bauteilkomplexität reduziert. Der angeformte Verschlussflansch wird insbesondere gebäudeinnenseitig an einer Öffnung eines Wandabschnitts angeordnet.

In einer Ausführungsform ist das Wärmeübertrager-System ein Wärmepumpen-System mit einer Außeneinheit, die außerhalb eines Gebäudes angeordnet ist und einer Inneneinheit, die innerhalb des Gebäudes angeordnet ist, wobei beide Einheiten mittels Fluidleitung verbunden sind und wobei diese Fluidleitungen mittels der erfindungsgemäßen Wärmeübertrager-Wanddurchführung durch eine Gebäudewand, insbesondere von einer Gebäudeaußenseite zu einer Gebäudeinnenseite und umgekehrt geführt werden. Vorzugsweise ist der Grundkörper des Formteils als zylindrischer Körper ausgebildet. Die Geometrie des zylindrischen Grundkörpers ist im Wesentlichen an die Länge und den Durchmesser der Öffnung des Wandabschnitts angepasst, wobei der Durchmesser des Grundkörpers so gewählt ist, dass dieser in die Öffnung einsetzbar ist. Die Fluidleitungs-Durchführungen sind vorzugsweise radial vollständig von dem Formteil umschlossen. Neben dem beschriebenen Anwendungsfall eignet sich die Wärmeübertrager-Wanddurchführung gemäß der vorliegenden Erfindung allgemein zur Durchführung von Leitungen eines Wärmeübertrager-Systems durch beliebige Wandabschnitte. Es kann sich hierbei auch um innenliegende Wandabschnitte handeln.

Gemäß einer Ausführungsform ist die Verschlusseinheit zur Anlage an dem Wandabschnitt ausgebildet und mit dem Formteil an dem ersten Endabschnitt verbindbar oder mit diesem verbunden. Hierdurch wird eine besonders kompakte Einheit angegeben, bei der das Formteil unmittelbaren Kontakt zu dem ersten Endabschnitt hat.

Gemäß einer alternativen Ausführungsform ist die Verschlusseinheit im montierten Zustand der Wärmeübertrager-Wanddurchführung beabstandet zu dem Formteil angeordnet, insbesondere wobei ein Zwischenraum zwischen der Verschlusseinheit und dem Formteil zumindest teilweise mit einem Füllmaterial gefüllt ist. Diese alternative Ausführungsform ist vorteilhaft für Anwendungsfälle, bei denen das Formteil kürzer ist als die Dicke des Wandabschnitts. Die entstehenden Luftspalte werden vorzugsweise mit Füllmaterial gefüllt, bspw. mit Butyl. Gemäß dieser alternativen Ausführungsform können entweder größere Wandstärken überwunden werden oder aber kleinere Formteile für gegebene Wandstärken verwendet werden.

Gemäß einer Ausführungsform ist das geschäumte oder expandierte Material ausgewählt aus der Liste umfassend Polystyrol, Polypropylen, Polyurethan, Zellkautschuk. Die genannten Materialien haben sich als geeignet erwiesen zur Sicherstellung einer einfachen Verarbeitbarkeit und weisen gleichzeitig das gewünschte Wärmedämmverhalten sowie die gewünschten elektrischen Isoliereigenschaften auf.

Gemäß einer Ausführungsform ist das Formteil aus Schaumglas ausgebildet. Derartiges Schaumglas ist nicht nur formbeständig, sondern auch beständig gegen Feuchtigkeit, wie Regenwasser.

Gemäß einer Ausführungsform weist das Formteil wenigstens zwei Teilabschnitte auf, die das Formteil entlang seiner Längsachse teilen. Die Teilabschnitte des Formteils sind vorzugsweise mittels einer Verbindungsanordnung miteinander verbunden. Die Teilabschnitte erstrecken sich vorzugsweise über die gesamte Länge des Formteils.

Vorzugsweise sind die Teilabschnitte symmetrisch ausgebildet. Die Teilabschnitte sind vorzugsweise als Teilschalen ausgebildet. Vorzugsweise sind in den Teilabschnitten Leitungs-Durchführungen ausgebildet. Gemäß einer Ausführungsform sind die Leitungs-Durchführungen in Richtung nach radial außen zumindest teilweise geöffnet ausgebildet. Gemäß einer Ausführungsform sind die Leitungs-Durchführungen auch nach innen zumindest teilweise geöffnet ausgebildet, bzw. teilweise in dem ersten Teilabschnitt und dem zweiten Teilabschnitt ausgebildet, sodass, wenn die Teilabschnitte verbunden werden, eine entsprechende Leitungs-Durchführung ausgebildet wird. Die Verbindungsanordnung ist vorzugsweise derart ausgestaltet, dass im Bereich der Teilabschnitte Taschen vorgesehen sind, in die Schiebemuttern einbringbar sind. Durch das Einschrauben einer Schraube in die Schiebemutter kann diese gegenüber der jeweiligen Verschlusseinheit verspannt werden.

Gemäß einer Ausführungsform weist der Grundkörper wenigstens eine, insbesondere zwei, von dem ersten Endabschnitt zu dem zweiten Endabschnitt verlaufende Stromleitungs-Durchführungen auf, welche dazu eingerichtet sind, jeweils eine stromführende Leitung des Wärmeübertrager-Systems aufzunehmen. Auf diese Weise können nicht nur die vorhandenen Fluidleitungen, die ein Außengerät mit einem Innengerät verbinden, durch eine Wand geführt werden, sondern auch zur elektrischen Versorgung des Außengeräts erforderliche stromführende Leitungen. Der Grundkörper stellt insoweit auch eine elektrische Isolation der Leitungen sicher, die vorzugsweise so ausgebildet ist, dass Anforderungen in Bezug auf die elektromagnetische Verträglichkeit (EMV) genüge getan wird.

Gemäß einer Ausführungsform weist der Grundkörper wenigstens eine von dem ersten Endabschnitt zu dem zweiten Endabschnitt verlaufende Datenleitungs-Durchführung auf, welche dazu eingerichtet ist, eine Datenleitung des Wärmeübetrager-Systems aufzunehmen. Zusätzlich oder alternativ zu der stromführenden Leitung kann mittels der Datenleitungs-Durchführung auch eine Datenleitung mittels der Wanddurchführung durch die Öffnung geführt werden, sodass auf diese Weise eine datenleitende Verbindung zu dem Außengerät hergestellt werden kann.

Gemäß einer Ausführungsform weist das Formteil eine Länge von 15 cm bis 120 cm auf, insbesondere von 50 cm bis 60 cm. Es hat sich herausgestellt, dass der betreffende Längenbereich einen überwiegenden Anteil der in der Praxis zu erwartenden Montageszenarien bzw. Wanddicken der Wandabschnitte abdeckt. Auf diese Weise können Grundkörper gleicher Geometrie vom Monteur mitgeführt werden und sind für typische Wanddicken hinreichend dimensioniert bzw. allenfalls noch vor Ort zu kürzen.

Gemäß einer Ausführungsform weist der Grundkörper eine Längsachse auf, welche sich von dem ersten Endabschnitt zu dem zweiten Endabschnitt erstreckt und wobei der Grundkörper entlang der Längsachse einen zylindrischen Querschnitt aufweist. Der zylindrische Querschnitt ist dabei vorzugsweise an einen hinreichenden und typischen Öffnungsdurchmesser eines Wandabschnittes angepasst, sodass der Grundkörper zwar ohne größere Schwierigkeiten montierbar bleibt, das Spiel zwischen der Öffnung des Wandabschnitts und dem Grundkörper jedoch möglichst gering ist. Gemäß einer Ausführungsform weist das Formteil Absätze zur Erleichterung der Entformung des Formteils auf. In einer Ausführungsform ist das Formteil nach Art eines Konus ausgebildet.

Gemäß einer Ausführungsform weist der Grundkörper wenigstens eine Markierung zur Längenanpassung des Formteils auf. Vorzugsweise ist die Markierung als Längenangabe ausgeführt, die unmittelbar auf dem Formteil angebracht ist. Nachdem der Monteur die Länge bzw. Tiefe der Öffnung des Wandabschnitts bestimmt hat, kann er so auf einfache Weise durch Konsultation der Markierungen auf dem Formteil einer Ablängung desselben vornehmen.

Gemäß einer Ausführungsform weist wenigstens eine, oder weisen insbesondere sämtliche der Durchführungen einen umlaufenden Zentriersteg oder mehrere axial verlaufende Zentrierstege zur Zentrierung der Leitungen auf. Vorzugsweise weist der Zentriersteg eine Sollbruchstelle auf. Ein solcher Zentriersteg kann in die Durchführungen eingeformt bzw. eingeschäumt sein und stellt sicher, dass die Leitungen auch bei geringfügigen Durchmesserschwankungen der Leitungen oder bei verschiedenen Leitungsdurchmessern zuverlässig in dem Formteil gehalten werden.

Gemäß einer Ausführungsform weist die Wanddurchführung ein Dichtmittel auf, welches in einem sich radial zwischen dem Grundkörper und der Öffnung in dem Gebäude-Wandabschnitt erstreckenden Zwischenraum angeordnet ist. Das Dichtmittel ist vorzugsweise als Quellband oder Montageschaum ausgebildet. Das Quellband ist vorzugsweise als Polyurethan-Komprimierband, Polyethylen-Rundschnur, Polyurethan-Rundschnur oder Ethylen-Propylen-Dien-Kautschuk (EPDK)-Schaumstoffband ausgebildet. Für den Fall, dass ein solches Quellband verwendet wird, wird die Schadstoffbelastung für den Installateur reduziert und es entfällt darüber hinaus zusätzlicher Einweisungsaufwand. Im Falle der Verwendung von Montageschaum wird eine besonders einfache Montierbarkeit sichergestellt. Gemäß einer alternativen Ausführungsform kann als Dichtmittel Dickschichtkleber und/oder Schaumklebeband verwendet werden.

Gemäß einer Ausführungsform ist das Formteil insgesamt axial und/oder radial kompressibel ausgebildet. Gemäß einer Ausführungsform ist das Formteil vor der Montage radial oder axial vorkomprimiert und dehnt sich nach dem Einsetzen in die Wandöffnung und dem Lösen einer entsprechenden Verspannung axial und/oder radial aus. Hierdurch kann auf alternative Dichtmittel verzichtet werden und eine besonders gute Dichtung des Formteils bzw. Grundkörpers gegenüber der Wandöffnung erreicht werden.

Gemäß einer Ausführungsform weist die Verschlusseinheit an der dem Wandabschnitt zugewandten Seite eine Dichtung auf, insbesondere eine Zellkautschuk-Dichtung. Jene Seite der Wanddurchführung, die mit der Zellkautschuk-Dichtung versehen ist, wird vorzugsweise als gebäudeaußenseitige Dichtung verwendet und stellt sicher, dass eine Abdichtung gegenüber dem Wandabschnitt erfolgt. Gemäß einer Ausführungsform ist die Verschlusseinheit als Acrylplatte oder Spritzgussteil ausgebildet oder weist eine solche auf. Vorzugsweise weist die Verschlusseinheit einen Flansch, vorzugsweise einen umlaufenden Flansch, zur Anlage an dem Wandabschnitt auf.

Gemäß einer alternativen Ausführungsform ist die Verschlusseinheit eine erste Verschlusseinheit, wobei die Wanddurchführung eine zweite Verschlusseinheit aufweist, welche zur Anlage an dem Wandabschnitt ausgebildet ist und mit dem Formteil an dem zweiten Endabschnitt verbindbar ist, wobei die zweite Verschlusseinheit Durchgänge für die durch die Wanddurchführung hindurchzuführenden Leitungen aufweist. Gemäß dieser alternativen Ausführungsform ist an dem zweiten Endabschnitt somit kein Verschlussflansch angeformt, sondern eine zweite Verschlusseinheit vorgesehen, die mit dem zweiten Endabschnitt des Formteils verbindbar ist.

Gemäß einer Ausführungsform weisen die erste Verschlusseinheit und/oder die zweite Verschlusseinheit wenigstens ein Rastmittel auf, welches dazu eingerichtet ist, in das Formteil einzudringen und eine rastende Verbindung mit dem Formteil einzugehen. Vorzugsweise ist das Rastmittel als Rasthaken ausgebildet. Der Rasthaken weist insbesondere eine Spitze auf, die ein erleichtertes Eindringen in das Formteil begünstigt. Der Rasthaken weist ferner vorzugsweise einen oder mehrere Widerhaken auf, die sicherstellen, dass nach dem Einbringen des Rasthakens in das Formteil eine feste Verbindung zwischen Formteil und Rastmittel geschaffen ist.

In einer Ausführungsform weist die erste Verschlusseinheit zwei Rastmittel auf, die gegenüberliegend voneinander angeordnet sind. In einer Ausführungsform weist die zweite Verschlusseinheit zwei Rastmittel auf, die gegenüberliegend voneinander angeordnet sind. In einer Ausführungsform weisen die erste Verschlusseinheit und/oder die zweite Verschlusseinheit Führungsmittel auf, die vorzugsweise in Umfangsrichtung um die Verschlusseinheit angeordnet ist und deren Ausrichtung mit einem Durchmesser des Formteils korrespondiert. Die Führungsmittel erlauben eine Ausrichtung und Führung der Verschlusseinheiten relativ zu dem Formteil. In einer Ausführungsform sind die Verschlusseinheiten ausschließlich mithilfe von Rastmitteln mit dem Formteil verbunden. In einer Ausführungsform sind die Verschlusseinheiten sowohl mittels Rastmitteln als auch mittels Dämmstoffdübeln mit dem Formteil verbunden. In einer Ausführungsform sind die Verschlusseinheiten mittels Rastmitteln und wenigstens einem Verspannmittel miteinander verbunden. Das Verspannmittel ist vorzugsweise als Gewindestange ausgebildet. Die Gewindestange ist vorzugsweise aus einem nichtleitenden Material, insbesondere Kunststoff, ausgebildet. In einer Ausführungsform ist lediglich eine der Verschlusseinheiten mittels eines Rastmittels und/oder Verspannmittels und/oder Dämmstoffdübels mit dem Formteil verbunden.

Gemäß einer Ausführungsform ist wenigstens eine der Verschlusseinheiten, insbesondere die Verschlusseinheit an dem ersten Endabschnitt, mit dem Formteil mittels Schrauben oder Dübeln, insbesondere Dämmstoffdübeln, verbunden, die an den jeweiligen Endabschnitt in das Formteil geschraubt sind. Insbesondere wird hierdurch eine Verspannung zwischen der jeweiligen Verschlusseinheit und dem Formteil erreicht.

Gemäß einer Ausführungsform weist die erste Verschlusseinheit und/oder die zweite Verschlusseinheit mindestens ein Führungsrohr auf, und das Formteil einen korrespondierenden Aufnahmekanal für das Führungsrohr, insbesondere wobei das Führungsrohr mit wenigstens einem Durchgang für die durch die Wanddurchführung hindurchzuführende Leitung korrespondiert und/oder der Aufnahmekanal mit einer der Leitungs-Durchführungen.

Durch das Vorsehen eines Führungsrohrs, welches in einem Aufnahmekanal des Formteils aufgenommen ist, kann eine besonders einfache Längenanpassung der Wanddurchführung erfolgen, in dem Formteil und Verschlusseinheit geführt zueinander relativ positioniert werden. Eventuell entstehende Räume zwischen Formteil und Verschlusseinheit können bedarfsweise mit Füllmaterial gefüllt werden.

Gemäß einer Ausführungsform weist wenigstens eine der Verschlusseinheiten und/oder der Verschlussflansch eine Entlüftungsöffnung zur Entlüftung der Öffnung auf. Insbesondere für jenes Montageszenario, bei dem Schaum in den Zwischenraum zwischen Öffnung und Formteil eingebracht wird, ist eine solche Öffnung zur sicheren Applizierbarkeit und Aushärtung des Schaums vorteilhaft. Eine solche Öffnung erlaubt darüber hinaus den Austritt der bei der Aushärtung des Schaums entstehenden Gase. Gemäß einer Ausführungsform ist das Formteil in eine Richtung von dem ersten Endabschnitt zu dem zweiten Endabschnitt, das heißt in Axialrichtung des Formteils, mehrteilig ausgebildet, insbesondere zweiteilig oder dreiteilig. Hierdurch wird ein nachträglicher Einbau des Formteils erleichtert und eine einfache Herstellbarkeit des Formteils begünstigt. Gemäß einer Ausführungsform sind die Formteile miteinander verbunden, insbesondere zusammengesteckt oder hintereinander angeordnet.

Die Erfindung ist vorstehend unter Bezugnahme auf eine Wanddurchführung beschrieben worden. In einem weiteren Aspekt betrifft die vorliegende Beschreibung ein Formteil für eine Wärmeübertrager-Wanddurchführung zur überirdischen Installation eines Wärmeübertrager-Systems mit mehreren Leitungen, insbesondere wärmeführenden Fluidleitungen, wobei die Wanddurchführung zum Durchführen der Leitungen durch eine Öffnung eines Wandabschnitts eingerichtet ist. Das Formteil ist in die Öffnung einsetzbar, wobei das Formteil einen Grundkörper aufweist mit einem ersten Endabschnitt und einem gegenüberliegenden zweiten Endabschnitt, und wobei der Grundkörper wenigstens zwei von dem ersten Endabschnitt zu dem zweiten Endabschnitt verlaufende Leitungs-Durchführungen aufweist, welche dazu eingerichtet sind, jeweils eine Leitung des Wärmeübertrager-Systems aufzunehmen.

Gemäß einer Ausführungsform ist das Formteil aus einem geschäumten Material ausgebildet. Gemäß einer Ausführungsform ist das geschäumte Material ausgewählt aus der Liste umfassend expandiertes Polystyrol, expandiertes Polypropylen, Polyurethan. Gemäß einer Ausführungsform weist der Grundkörper wenigstens eine, insbesondere zwei, von dem ersten Endabschnitt zu dem zweiten Endabschnitt verlaufende Stromleitungs-Durchführungen auf, welche dazu eingerichtet sind, jeweils eine stromführende Leitung des Wärmeübertrager-Systems aufzunehmen. Gemäß einer Ausführungsform weist der Grundkörper wenigstens eine von dem ersten Endabschnitt zu dem zweiten Endabschnitt verlaufende Datenleitungs-Durchführung auf, welche dazu eingerichtet ist, eine Datenleitung des Wärmeübertrager-Systems aufzunehmen. Gemäß einer Ausführungsform weist das Formteil eine Länge von 15 cm bis 120 cm auf, insbesondere 50 cm bis 60 cm.

Gemäß einer Ausführungsform weist der Grundkörper eine Längsachse auf, welche sich von dem ersten Endabschnitt zu dem zweiten Endabschnitt erstreckt, und wobei der Grundkörper entlang der Längsachse einen zylindrischen oder im wesentlichen zylindrischen Querschnitt aufweist. Der Begriff "im wesentlichen zylindrischen" umfasst auch solche Körper, die beispielsweise aus mehreren Zylindern mit geringfügig unterschiedlichen Durchmessern gebildet sind, oder beispielsweise umlaufende Rillen, und dergleichen, aufweisen. Gemäß einer Ausführungsform weist der Grundkörper wenigstens eine Markierung zur Längenanpassung des Formteils auf. Gemäß einer Ausführungsform weist wenigstens eine, weisen insbesondere sämtliche der Durchführungen einen oder mehrere axial verlaufende Zentrierstege zur Zentrierung der Leitungen auf. Gemäß einer Ausführungsform ist an dem zweiten Endabschnitt ein Verschlussflansch angeformt. Gemäß einer Ausführungsform weist der Grundkörper Ausnehmungen zur Aufnahme von Dämmstoffdübeln auf. Gemäß einer Ausführungsform weist der Verschlussflansch eine Entlüftungsordnung zur Entlüftung der Öffnung auf.

Das Formteil macht sich im Übrigen die gleichen Vorteile und bevorzugten Ausführungsformen zunutze wie die erfindungsgemäße Wanddurchführung und umgekehrt. Diesbezüglich wird auf die obigen Ausführungen verwiesen und deren Inhalt hier miteinbezogen.

In einem weiteren Aspekt betrifft die vorliegende Beschreibung ein Verfahren zur Montage einer Wärmeübertrager-Wanddurchführung nach einem der vorstehenden Ausführungsbeispiele in einer oberirdischen Öffnung an einem Wandabschnitt mit den Schritten: Einsetzen des Formteils in die Öffnung, Durchführen der Leitungen durch das Formteil, Durchführen der Leitungen durch die Verschlusseinheit, Verbinden, insbesondere Verspannen, der Verschlusseinheit mit dem Formteil. Vorzugsweise weist das Verfahren weiterhin den Schritt auf: Ablängen des Formteils in Abhängigkeit von der Wanddicke des Wandabschnitts.

Auch das Verfahren macht sich die gleichen Vorteile und bevorzugten Ausführungsformen zunutze wie die erfindungsgemäße Wanddurchführung und das Formteil. Diesbezüglich wird auf die obigen Ausführungen verwiesen und deren Inhalt hier miteinbezogen.

In einem weiteren Aspekt betrifft die Erfindung die Verwendung einer Wärmeübertrager-Wanddurchführung nach einem der vorstehenden Ausführungsbeispiele zum Durchführen von Leitungen eines Wärmeübertrager-Systems, insbesondere eines Wärmepumpensystems, durch eine oberirdische Öffnung in einem Wandabschnitt. Auch die Verwendung macht sich die gleichen Vorteile und bevorzugten Ausführungsformen zunutze wie die erfindungsgemäße Wärmeübertrager-Wanddurchführung, das erfindungsgemäße Formteil und das erfindungsgemäße Verfahren und umgekehrt. Diesbezüglich wird auf die obigen Ausführungen verwiesen und deren Inhalt hier miteinbezogen.

Die Erfindung wird nachfolgend anhand bevorzugter Ausführungsbeispiele unter Bezugnahme auf die beigefügten Figuren näher beschrieben.

Hierbei zeigen:
- Fig. 1: ein erstes Ausführungsbeispiel einer erfindungsgemäßen Wärmeübertrager-Wanddurchführung, eingesetzt in eine Öffnung eines Wandabschnitts, in einer Schnittdarstellung;
- Fig. 2: das Ausführungsbeispiel der erfindungsgemäßen Wanddurchführung gemäß Fig. 1 in einer perspektivischen Darstellung;
- Fig. 3: das Ausführungsbeispiel der erfindungsgemäßen Wanddurchführung gemäß den Fig. 1 und 2 in einer Schnittdarstellung;
- Fig. 4, 5: Seitenansichten des Ausführungsbeispiels der erfindungsgemäßen Wanddurchführung gemäß den vorstehenden Figuren.
- Fig. 6: ein alternatives Ausführungsbeispiel einer Wärmeübertrager-Wanddurchführung in einer perspektivischen Ansicht;
- Fig. 7: das Ausführungsbeispiel einer Wärmeübertrager-Wanddurchführung gemäß Fig. 6 in einer Schnittdarstellung;
- Fig. 8: eine Verschlusseinheit des Ausführungsbeispiels einer Wärmeübertrager-Wanddurchführung gemäß den Fig. 6 und 7;
- Fig. 9: ein alternatives Ausführungsbeispiel einer Wärmeübertrager-Wanddurchführung in einer Schnittansicht;
- Fig. 10: ein weiteres alternatives Ausführungsbeispiel einer Wärmeübertrager-Wanddurchführung in einer Schnittansicht;
- Fig. 11: ein Ausführungsbeispiel eines Wärmeübertrager-Systems;
- Fig. 12: ein alternatives Ausführungsbeispiel einer erfindungsgemäßen Wanddurchführung in einer perspektivischen Ansicht;
- Fig. 13: einen Teilabschnitt des Formteils gemäß dem Ausführungsbeispiel gemäß Figur 12 in einer perspektivischen Ansicht; und
- Fig. 14: das Ausführungsbeispiel des Formteils gemäß den Figuren 12 und 13 in einer Unteransicht.

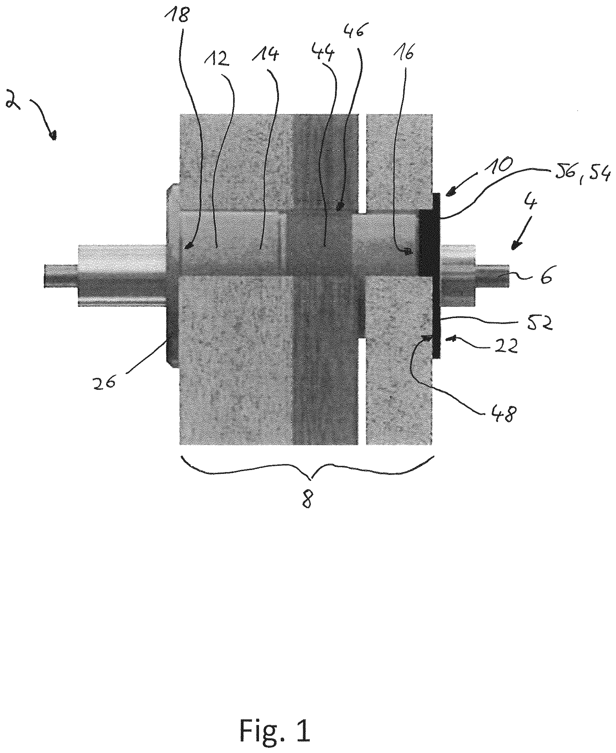

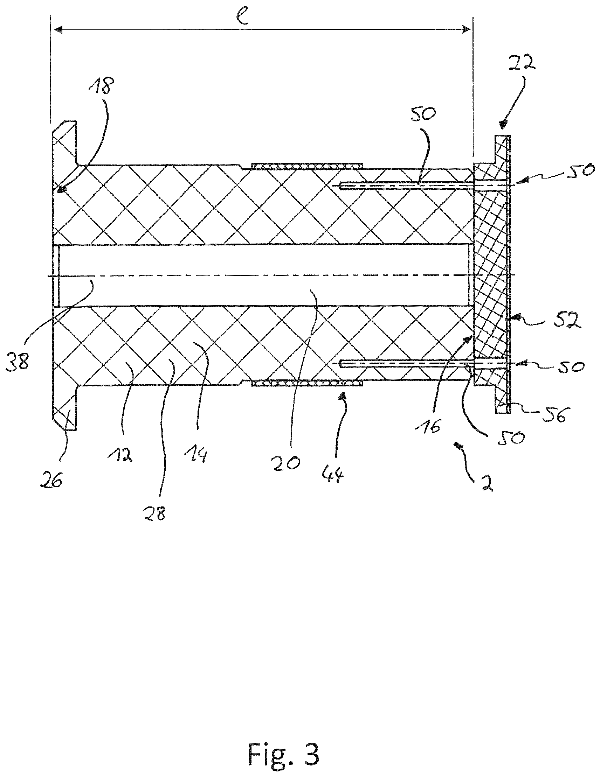

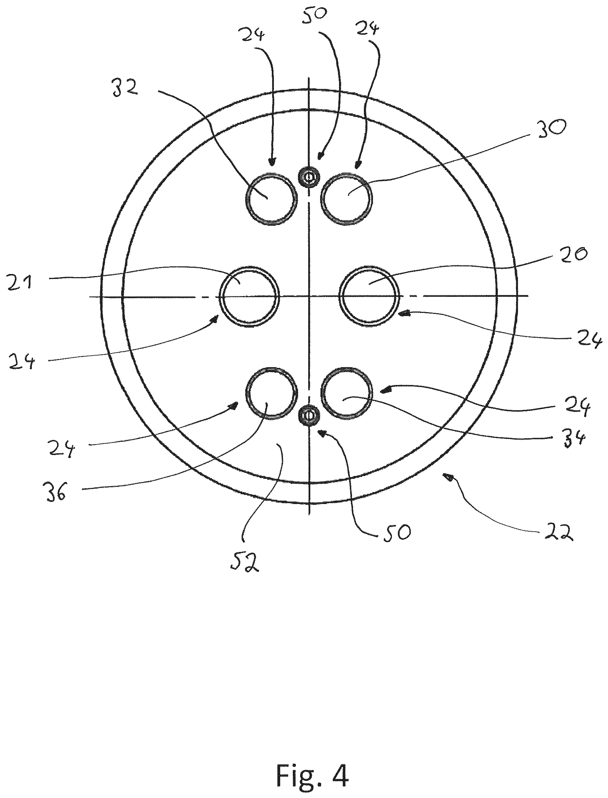

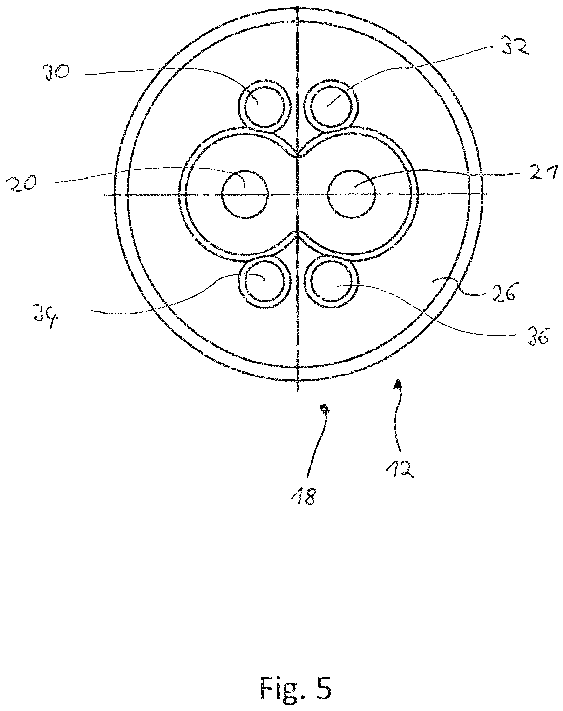

Die Fig. 1 bis 5 zeigen ein erstes Ausführungsbeispiel einer Wärmeübertrager-Wanddurchführung 2. Die Wärmeübertrager-Wanddurchführung 2 dient zur oberirdischen Installation eines Wärmeübertrager-Systems 4, welches in Fig. 1 lediglich schematisch angedeutet ist. Ein solches Wärmeübertrager-System 4 weist zumeist zwei Fluidleitungen 6 auf, die ein nicht gezeigtes Innengerät, welches innerhalb eines Gebäudes angeordnet ist, mit einem nicht gezeigten Außengerät, welches außerhalb des Gebäudes angeordnet ist, verbinden. Die Wärmeübertrager-Wanddurchführung 2 ist zum Durchführen der Fluidleitungen 6 durch eine Öffnung 10 eines Wandabschnitts 8 eingerichtet. Die Wärmeübertrager-Wanddurchführung 2 weist ein Formteil 12 sowie eine Verschlusseinheit 22 auf.

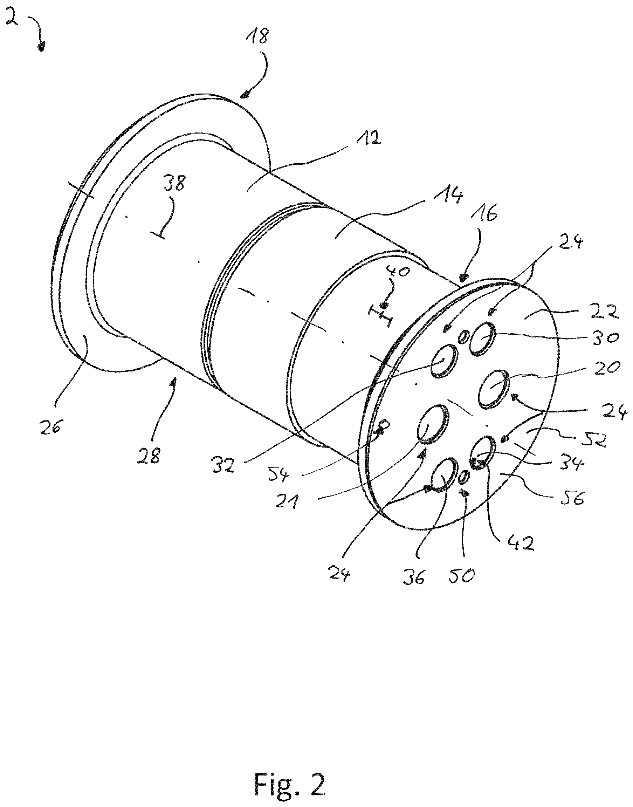

Das Formteil 12 ist die Öffnung 10 einsetzbar. Das Formteil 12 weist einen Grundkörper 14 auf, mit einem ersten Endabschnitt 16 und einem gegenüberliegenden zweiten Endabschnitt 18. Das Formteil 12 weist einen im Wesentlichen länglichen Querschnitt auf. Der erste Endabschnitt 16 und der zweite Endabschnitt 18 sind im Wesentlichen parallel zu den Wänden eines Wandabschnitts 8 ausgerichtet. Der Grundkörper 14 weist zwei von den ersten Endabschnitt 16 zu dem zweiten Endabschnitt 18 verlaufende Fluidleitungs-Durchführungen 20, 21 auf, die insbesondere in den Fig. 2 sowie 4 und 5 erkennbar sind. Die Fluidleitungs-Durchführungen 20, 21 sind dazu eingerichtet, jeweils eine Fluidleitung 6 des Wärmeübertrager-Systems 4 aufzunehmen. Die Fluidleitungs-Durchführungen 20, 21 sind voneinander beanstandet in dem Formteil 12 angeordnet und werden radial von diesem umschlossen.

Die Verschlusseinheit 22 ist zur Anlage an dem Wandabschnitt 8 ausgebildet. Die Verschlusseinheit 22 ist mit dem Formteil 12 an dem ersten Endabschnitt 16 verbunden. Die Verschlusseinheit 22 weist Durchgänge 24 für die durch die Wärmeübertrager-Wanddurchführung 2 hindurchzuführenden Leitungen 6 auf. Das Formteil 12 ist aus einem geschäumten Material 28 ausgebildet. Das geschäumte Material 28 ist vorzugsweise ausgebildet als expandiertes Polystyrol, expandiertes Polypropylen oder Polyurethan.

In dem in den Fig. 1 bis 5 gezeigten Ausführungsbeispiel weist der Grundkörper 14 weiterhin zwei von dem ersten Endabschnitt 16 zum zweiten Endabschnitt 18 verlaufende Stromleitungs-Durchführungen 30, 32 auf. Die Stromleitungs-Durchführungen 30, 32 sind dazu eingerichtet, jeweils eine stromführende Leitung des Wärmeübertrager-Systems 4 aufzunehmen. Der Grundkörper 14 weist ferner zwei sich von dem ersten Endabschnitt 16 zu dem zweiten Endabschnitt 18 verlaufende Datenleitungs-Durchführungen 34, 36 auf. Die Datenleitungs-Durchführungen 34, 36 sind dazu eingerichtet, eine Datenleitung des Wärmeübtrager-Systems 4 aufzunehmen. Die Fluidleitungs-Durchführungen 20, 21, die Stromleitungs-Durchführungen 30, 32 sowie die Datenleitungs-Durchführungen 34, 36 sind jeweils beabstandet zueinander in dem Formteil 12 ausgebildet. Sie erstrecken sich geradlinig von dem ersten Endabschnitt 16 zu dem zweiten Endabschnitt 18, das bedeutet von einer ersten Stirnseite des Formteils 12 zu einer zweiten, gegenüberliegenden Stirnseite des Formteils 12.

Das Formteil 12 weist eine Länge I auf. Der Grundkörper 14 weist ferner eine Längsachse 38 auf. Die Längsachse 38 erstreckt sich von dem ersten Endabschnitt 16 zu dem zweiten Endabschnitt 18. Der Grundkörper 14 weist entlang der Längsachse 38 einen zylindrischen Querschnitt auf. Der zylindrische Querschnitt kann abgestuft ausgebildet sein. Ein Durchmesser des Grundkörpers 14 korrespondiert insbesondere mit einem Durchmesser der Öffnung 10. Dabei meint "korrespondiert" im Sinne der vorliegenden Erfindung, dass ein Durchmesser des Grundkörpers 14 geringfügig kleiner ist als ein Durchmesser der Öffnung 10, sodass das Formteil 12 auf einfache Weise in die Öffnung 10 eingeführt werden kann, und dennoch ein in Fig. 1 gezeigter Zwischenraum 46 zwischen Formteil 12 und Öffnung 10 möglichst klein ist.

Der Grundkörper 14 weist wenigstens eine Markierung 40 zur Längenanpassung des Formteils 12 auf. Die Markierung 40 kann auch als Sägerille ausgebildet sein, die den Monteur beim Ablängen des Formteils 12 unterstützt. Optional weisen die Durchführungen 20, 21, 30, 32, 34, 36 einen Zentriersteg 42 zur Zentrierung der Leitungen 6 auf. Die Wärmeübertrager-Wanddurchführung 2 weist darüber hinaus ein Dichtmittel 44 auf. Das Dichtmittel 44 ist in dem sich radial zwischen dem Grundkörper 14 und der Öffnung 10 in dem Gebäude-Wandabschnitt 8 erstreckenden Zwischenraum 46 angeordnet. Das Dichtmittel 44 ist vorzugsweise als Quellband, wie in Fig. 1 gezeigt, ausgebildet. Alternativ kann das Dichtmittel 44 als Montageschaum ausgebildet sein.

Die Verschlusseinheit 22 weist an der dem Wandabschnitt 8 zugewandten Seite eine Dichtung 48 auf, insbesondere eine Zellkautschuk-Dichtung. Die Verschlusseinheit 22 mit der Zellkautschuk-Dichtung wird insbesondere zur Abdichtung an einer Gebäudeaußenseite verwendet. Die Verschlusseinheit 22 weist eine Acrylplatte 52 oder ein Spritzgussteil auf bzw. ist daraus ausgebildet. Die Verschlusseinheit 22 weist einen Flansch 56, welcher insbesondere als umlaufender Flanschkragen 56 ausgebildet ist, zur Anlage an den Wandabschnitt 8 auf. In der in den Fig. 1 bis 5 gezeigten Ausführungsform ist an dem zweiten Endabschnitt 18 ein Verschlussflansch 26 angeformt. Der Verschlussflansch 26 ist einstückig mit dem Grundkörper 14 ausgebildet, das heißt Verschlussflansch 26 und Grundkörper 14 bilden ein einziges Bauteil, welches beispielsweise zur Herstellung des Bauteils in einer gemeinsamen Form geschäumt wird. Der Verschlussflansch 26 wird insbesondere mit einem innenseitigen Wandabschnitt 8 zur Anlage gebracht.

Die Verschlusseinheit 22 und der Verschlussflansch 26 weisen vorzugsweise jeweils eine Entlüftungsöffnung 54 zur Entlüftung der Öffnung 10 auf. Eine solche Entlüftungsöffnung 54 ist insbesondere dann vorteilhaft, wenn der entstehende Raum zwischen Formteil 12 und Öffnung 10 ausgeschäumt werden soll. In dem Grundkörper 14 des Formteils 12 sind im Bereich des zweiten Endabschnitts 18 Dämmstoffdübel-Bohrungen 50 vorgesehen. Diese stellen eine Führung und Montagehilfe für Dämmstoffdübel 68 bereit, welche die Verschlusseinheit 22 mit dem Formteil 12 an dem zweiten Endabschnitt 18 verschrauben bzw. verspannen.

Die Montage einer betreffenden Wärmeübertrager-Wanddurchführung 2 erfolgt insbesondere in Form der Schritte: Einsetzen des Formteils 12 in die Öffnung 10, Durchführen der Leitungen 6 durch das Formteil 12, Durchführen der Leitungen 6 durch die Verschlusseinheit 22, Verbinden, insbesondere Verspannen der Verschlusseinheit 22 mit dem Formteil 12 mithilfe von Dämmstoffdübeln 68. Wenn die Länge I des Formteils 12 größer ist als eine Wanddicke des Wandabschnitts 8, erfolgt vor der Montage ein Ablängen des Formteils 12.

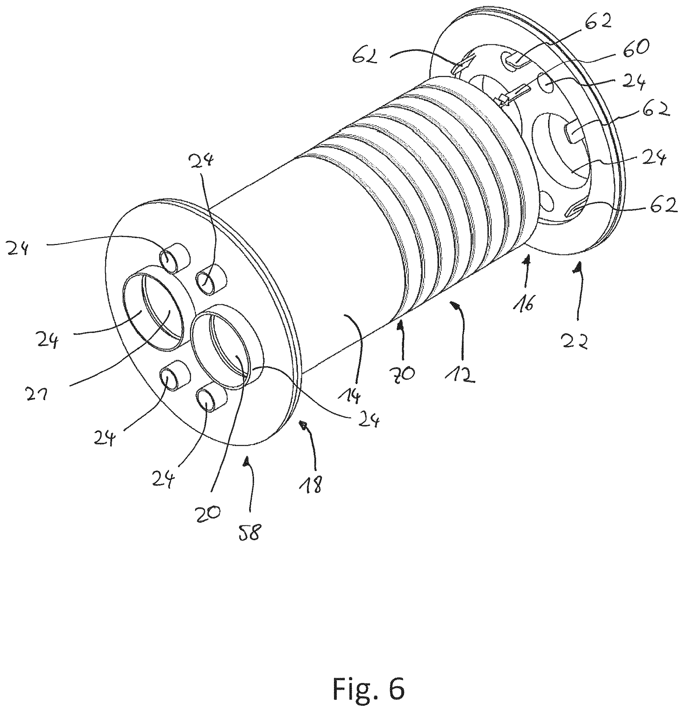

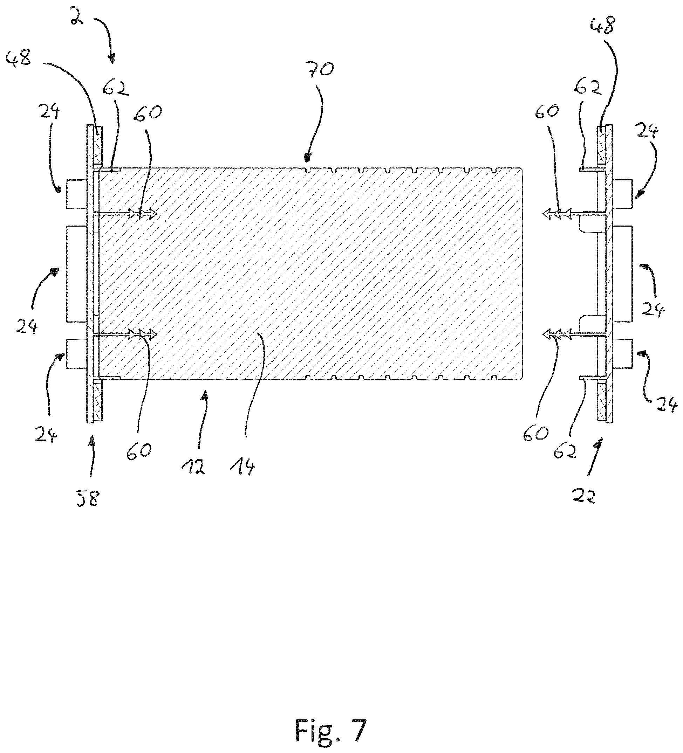

Die Fig. 6 bis 8 zeigen ein alternatives Ausführungsbeispiel der Wärmeübertrager-Wanddurchführung 2. Die Wärmeübertrager-Wanddurchführung 2 weist in an sich bekannter Weise ein Formteil 12 auf, welches in die Öffnung 10 einsetzbar ist, wobei das Formteil 12 ein Grundkörper 14 aufweist mit einem ersten Endabschnitt 16 und einem gegenüberliegenden zweiten Endabschnitt 18. Der Grundkörper 14 weist jeweils zwei von dem ersten Endabschnitt 16 zu dem zweiten Endabschnitt 18 verlaufende Fluidleitungs-Durchführungen 20, 21, Stromleitungs-Durchführungen 30, 32 sowie Datenleitungs-Durchführungen 34, 36 auf. Diese sind in Fig. 6 lediglich teilweise angedeutet und ansonsten wie in den Fig. 1 bis 5 gezeigt.

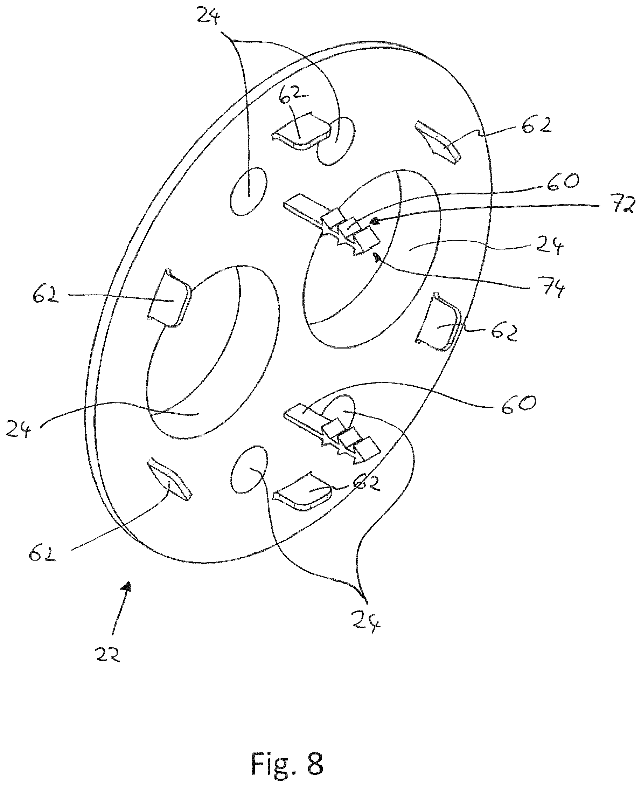

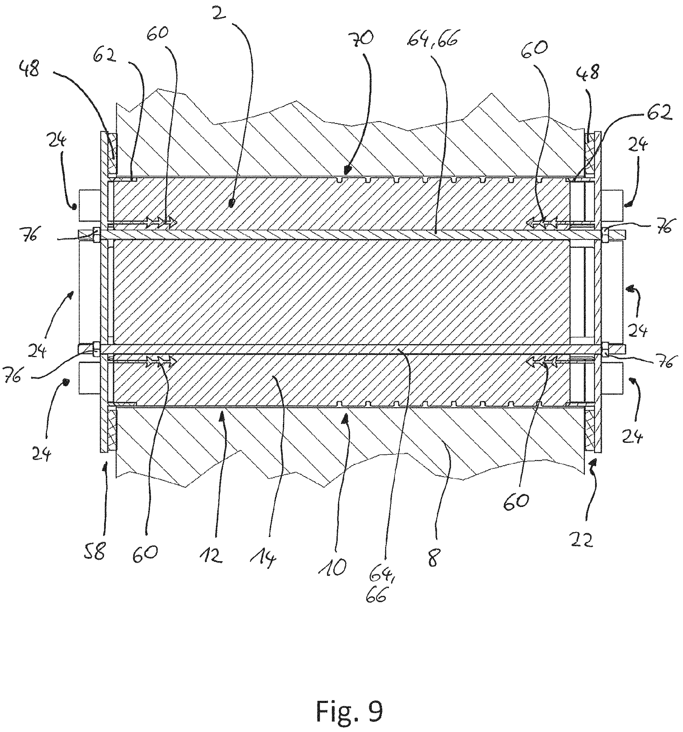

Dabei hinaus weist das in Fig. 6 gezeigte Ausführungsbeispiel zwei Verschlusseinheiten 22, 58 auf. Die Verschlusseinheit 22 ist mit im ersten Endabschnitt 16 verbindbar. Die zweite Verschlusseinheit 58 ist mit dem zweiten Endabschnitt 18 verbindbar. In dem in den Fig. 6 bis 8 gezeigten Ausführungsbeispiel erfolgt die Verbindung zwischen den Verschlusseinheiten 22, 58 und dem Grundkörper 14 dergestalt, dass die Verschlusseinheiten 22, 58 so in Richtung des Formteils 12 gedrückt werden, dass Rastmittel 60, die an den Verschlusseinheiten 22, 58 angeordnet sind, in das Formteil 12 eindringen und sich mit diesem verrasten. Unter Bezugnahme auf die Fig. 8 und 9 sind die Rastmittel 60 mit Widerhaken 72 versehen, die nach dem Eintreten in das Formteil 12 eine sichere Verbindung mit dem Formteil 12 sicherstellen. Die Rastmittel 60 weisen jeweils eine Penetrierspitze 74 auf, die das Eindringen der Rastmittel 60 in das Formteil 12 erleichtert.

Zur Ausrichtung der Verschlusseinheiten 22, 58 relativ zu dem Formteil 12 sind ferner Führungsmittel 62 vorgesehen. Die Führungsmittel 62 sind insbesondere gleichmäßig um einen Umfang der Verschlusseinheiten 22, 58 verteilt angeordnet, derart, dass eine Beabstandung der Führungsmittel 62 korrespondiert mit einem Durchmesser des Formteils 12. Ausweislich der Fig. 6 bis 8 weist jede Verschlusseinheit 22 zwei Rastmittel 60 auf, welche gegenüberliegend voneinander angeordnet sind sowie sechs Führungsmittel 62. An dem Formteil 12 sind darüber hinaus Sägerillen 70 angeordnet, die gleichzeitig als Längenskala zum Ablängen des Formteils 12 dienen.

Die Verschlusseinheiten 22, 58 weisen, wie bereits für das erste Ausführungsbeispiel vorgesehen, Durchgänge 24 für die Wärmeübertrager-Wanddurchführung 2 hindurchzuführende Leitung 6 auf. In dem in der Fig. 9 gezeigten Ausführungsbeispiel entspricht die Konfiguration der Wärmeübertrager-Wanddurchführung 2 im Wesentlichen dem Ausführungsbeispiel der Fig. 6 bis 8. Zusätzlich sind jedoch zur Verspannung der Verschlusseinheiten 22, 58 mit dem Formteil 12 zwei Verspannmittel 64 vorgesehen, die vorliegend als Gewindestangen 66 ausgebildet sind. An den Gewindestangen 66 sind jeweils außenseitig Muttern angeordnet, die ein Verspannen der mit den Muttern in Kontakt stehenden Verschlusseinheiten 22, 58 erlauben.

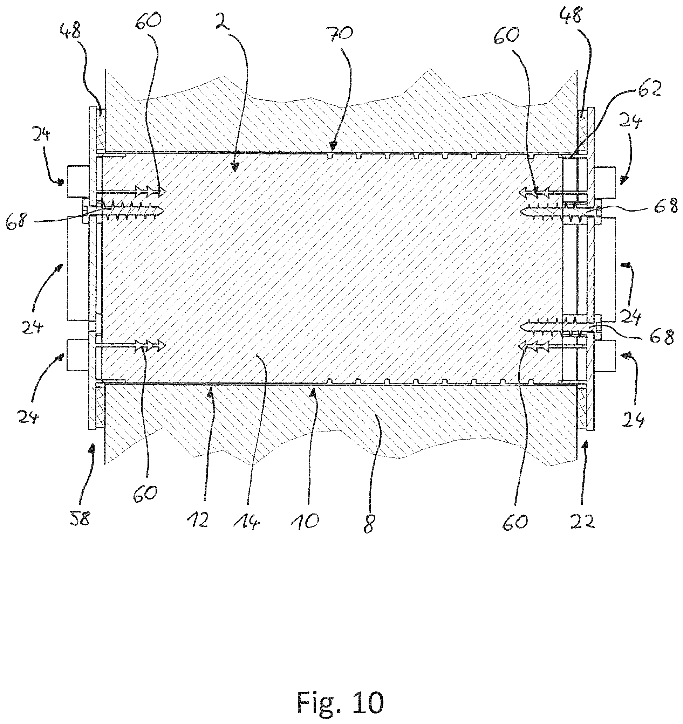

Fig. 10 zeigt ein weiteres alternatives Ausführungsbeispiel einer Wärmeübertrager-Wanddurchführung 2, welches sich ebenfalls an das Ausführungsbeispiel der Fig. 6 bis 8 anlehnen. Zusätzlich sind jedoch zur Verbindung und Verspannung der Verschlusseinheiten 22, 58 mit dem Formteil 12 Dämmstoffdübel 68 vorgesehen, die mit dem Formteil 12 verschraubt sind, wobei ein Kopf der Dämmstoffdübel 68 eine Spannkraft auf die jeweilige Verschlusseinheit 22, 58 ausübt, sodass die Verschlusseinheiten 22, 58 mit dem Formteil 12 verspannt sind.

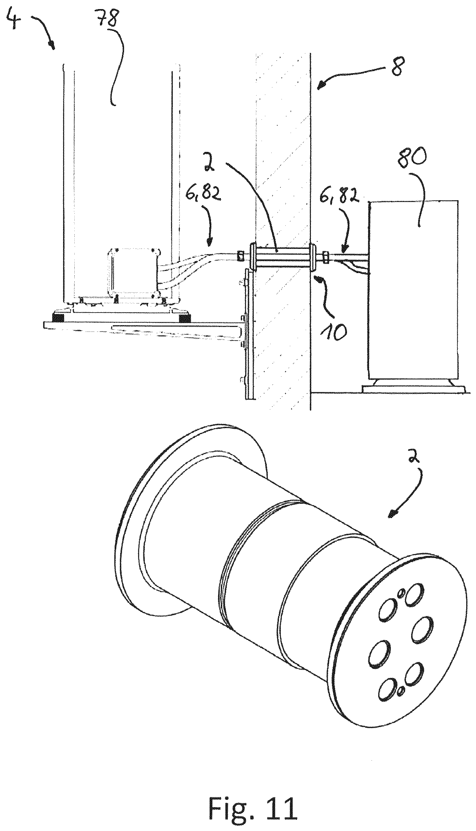

Fig. 11 zeigt ein Wärmeübertrager-System 4 mit einem Außengerät 78 und einem mit dem Außengerät über Leitungen 6, 82 verbundenen Innengerät 80. Die Leitungen 6, 82 sind mittels der Wärmeübertrager-Wanddurchführung 2 durch eine Öffnung 10 eines Wandabschnitts 8 geführt. Fig. 11 zeigt ferner die Wärmeübertrager-Wanddurchführung 2 in einer perspektiven Darstellung, welche der Darstellung in der Fig. 2 entspricht.

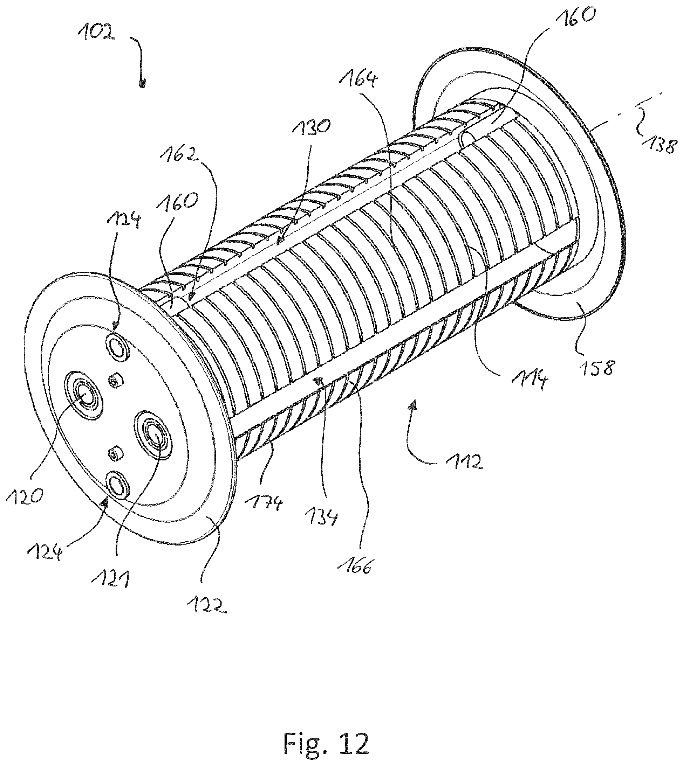

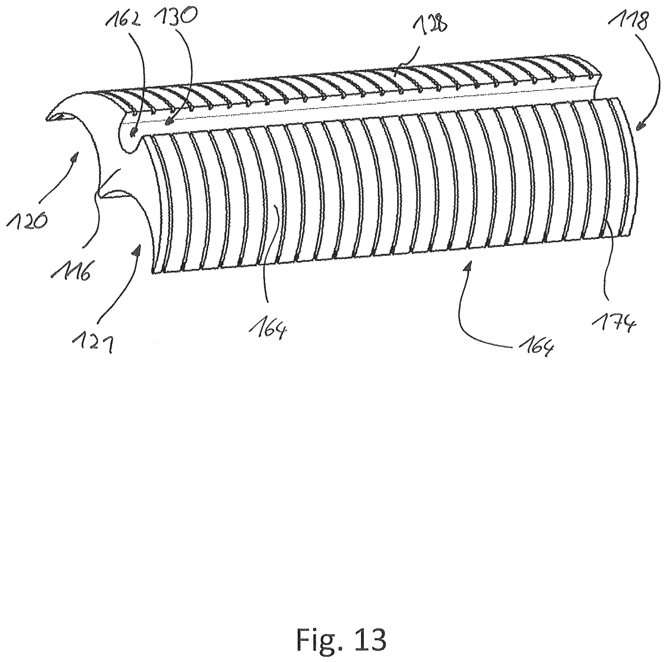

Figur 12 zeigt ein alternatives Ausführungsbeispiel einer Wärmeübertrager-Wanddurchführung 102. Die Wärmeübertrager-Wanddurchführung 102 eignet sich zur oberirdischen Installation eines Wärmeübertrager-Systems 4 mit mehreren Leitungen 6 (nicht gezeigt). Die Wärmeübertrager-Wanddurchführung 102 weist ein Formteil 112 auf, welches in eine Wandöffnung einsetzbar ist, wobei das Formteil 112 einen Grundkörper 114 aufweist mit einem ersten Endabschnitt 116 und einem gegenüberliegenden zweiten Endabschnitt 118, wie in Figur 13 dargestellt ist. Der Grundkörper 114 weist wenigstens zwei von dem ersten Endabschnitt 116 zu dem zweiten Endabschnitt 118 verlaufende Leitungs-Durchführungen 120, 121 auf, die vorliegend als Fluidleitungs-Durchführungen 120, 121 ausgebildet sind. Die Leitungs-Durchführungen 120, 121 sind dazu eingerichtet, jeweils eine Leitung des Wärmeübertrager-Systems 4 aufzunehmen. Der Grundkörper 114 weist eine Grundkörper-Längsachse 138 auf. Im vorliegenden Ausführungsbeispiel besteht das Formteil 112 ausschließlich aus dem Grundkörper 114.

Die Wärmeübertrager-Wanddurchführung 102 weist darüber hinaus eine Verschlusseinheit 122 auf. Diese ist zur Anlage an dem Wandabschnitt ausgebildet. Die Verschlusseinheit 122 weist Durchgänge 124 für die durch die Wanddurchführung 102 hindurchzuführenden Leitungen 6 auf. Das Formteil 112 ist aus einem geschäumten Material 128 ausgebildet.

Wie in Figur 12 gezeigt ist, weist das Formteil 112 wenigstens zwei Teilabschnitte 164, 166 auf. Die Teilabschnitte 164, 166 teilen das Formteil 112 entlang seiner Längsachse und erstrecken sich jeweils über die gesamte Länge des Formteils 112. Die Teilabschnitte 164, 166 des Formteils 112 weisen zwei von dem ersten Endabschnitt 116 zum zweiten Endabschnitt 118 verlaufende Strom- und Steuerleitungs-Durchführungen 130 auf sowie zwei Fluidleitungs-Durchführungen 120, 121. Durch die Durchführung 120, 121 können darüber hinaus auch Datenleitungen geführt werden. Die Wanddurchführung 102 weist darüber hinaus eine zweite Verschlusseinheit 158 auf, welche ebenfalls zur Anlage an einem Wandabschnitt ausgebildet ist und mit dem Formteil 112 an dem zweiten Endabschnitt 118 verbindbar ist.

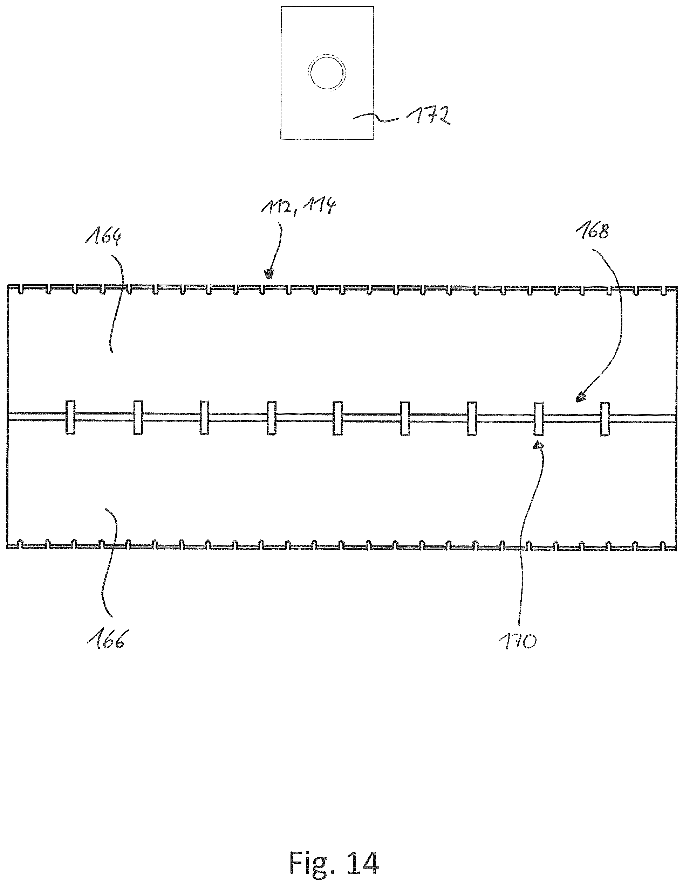

Auch die zweite Verschlusseinheit 158 weist in Figur 12 nicht dargestellte Durchgänge 124 für die durch die Wanddurchführung 102 hindurchzuführenden Leitungen 6 auf. Sowohl die erste Verschlusseinheit 122 als auch die zweite Verschlusseinheit 158 weisen jeweils mindestens ein Führungsrohr 160 auf. Das Formteil 112 weist korrespondierende Aufnahmekanäle 162 für das Führungsrohr 160 auf. Dabei korrespondiert das Führungsrohr 160 mit wenigstens einem Durchgang 124 für die durch die Wanddurchführung 102 hindurchzuführende Leitung bzgl. des Innendurchmessers des Führungsrohrs 160 zum Außendurchmesser der Leitung 6. Ferner korrespondiert der Aufnahmekanal 162 mit einer der Leitungs-Durchführungen 120, 121. Auf diese Weise können die Leitungs-Durchführungen 120, 121 im Rahmen einer Funktionsintegration auch zur Führung des Führungsrohrs 160 verwendet werden. Zwischen den aneinander angrenzenden Teilabschnitten 164, 166 des Formteils 112 ist eine Aussparung 134 ausgebildet. Zur Herstellung einer Verbindung zwischen dem Formteil 112 bzw. dessen Teilabschnitten 164, 166 und der jeweiligen Verschlusseinheit 122, 158 ist vorgesehen, in Taschen 170, die in Figur 14 gezeigt sind, sogenannte Schiebemuttern 172 einzusetzen. Wenn nunmehr durch die jeweilige Verschlusseinheit 122, 158 eine Schraube in Richtung der Schiebemutter 172 geführt wird, so wird die Schiebemutter bei einem entsprechenden Verspannvorgang in Richtung der Verschlusseinheit 122, 158 gedrückt. Da die Schiebemutter 172 in einer Tasche 170 in dem Grundkörper 114 aufgenommen ist, wird auf diese Weise auch der Grundkörper 114 gegen die jeweilige Verschlusseinheit 122, 158 gedrückt und somit der Grundköper 114 gegen die Verschlusseinheit 122, 158 verspannt.

Wie in Figur 14 gezeigt ist, können die Taschen 170 in einem Übergangsbereich zwischen einem ersten Teilabschnitt 164 und dem zweiten Teilabschnitt 166 angeordnet werden, sodass auch hier eine Relativfixierung der Teilabschnitte 164, 166 zueinander erfolgen kann. Wie in den Figuren 12 und 13 anschaulich erkennbar ist, weisen die Teilabschnitte 164, 166 darüber hinaus Sägeführungen 174 auf. Die Sägeführungen 174 dienen dazu, eine Säge zu führen, die dazu verwendet werden kann, den Grundkörper 114 abzulängen, je nach Wanddicke jener Wand, in welche die Wärmeübertrager-Wanddurchführung 102 eingesetzt werden soll.

### Bezugszeichenliste

- 2: Wärmeübertrager-Wanddurchführung
- 4: Wärmeübertrager-System
- 6: Leitung / Fluidleitung
- 8: Wandabschnitt
- 10: Öffnung
- 12: Formteil
- 14: Grundkörper
- 16: erster Endabschnitt
- 18: zweiter Endabschnitt
- 20: erste Fluidleitungs-Durchführung
- 21: zweite Fluidleitungs-Durchführung
- 22: Verschlusseinheit
- 24: Durchgänge der Verschlusseinheit
- 26: Verschlussflansch
- 28: geschäumtes Material
- 30: Erste Stromleitungs-Durchführung
- 32: Zweite Stromleitungs-Durchführung
- 34: erste Datenleitungs-Durchführung
- 36: zweite Datenleitungs-Durchführung
- 38: Grundkörper-Längsachse
- 40: Grundkörper-Markierung
- 42: Zentriersteg
- 44: Dichtmittel
- 46: Zwischenraum
- 48: Dichtung der Verschlusseinheit
- 50: Dämmstoffdübel-Bohrungen
- 52: Acrylplatte/Spritzgussteil
- 54: Entlüftungsöffnung
- 56: Flanschkragen der Verschlusseinheit
- 58: zweite Verschlusseinheit
- 60: Rastmittel
- 62: Führungsmittel
- 64: Verspannmittel
- 66: Gewindestange
- 68: Dämmstoffdübel

- 70: Sägerillen / Längenskala
- 72: Widerhaken
- 74: Penetrierspitze
- 76: Mutter
- 78: Außengerät
- 80: Innengerät
- 82: Leitungen (Strom, Daten)

- 102: Wärmeübertrager-Wanddurchführung
- 112: Formteil
- 114: Grundkörper
- 116: erster Endabschnitt
- 118: zweiter Endabschnitt
- 120: erste Fluidleitungs-Durchführung
- 121: zweite Fluidleitungs-Durchführung
- 122: Verschlusseinheit
- 124: Durchgänge der Verschlusseinheit
- 128: geschäumtes Material
- 130: Strom- und Steuerleitungs-Durchführung
- 134: Aussparung
- 138: Grundkörper-Längsachse
- 158: zweite Verschlusseinheit
- 160: Führungsrohr
- 162: Aufnahmekanal
- 164: erster Teilabschnitt
- 166: zweiter Teilabschnitt
- 168: Verbindungsanordnung
- 170: Tasche
- 172: Schiebemutter
- 174: Sägeführung

- I: Länge des Formteils

## Patentansprüche

1. Wärmeübertrager-Wanddurchführung (2, 102) zur oberirdischen Installation eines Wärmeübertrager-Systems (4) mit mehreren Leitungen (6), wobei die Wanddurchführung (2) zum Durchführen der Leitungen (6) durch eine Öffnung (10) eines Wandabschnitts (8) eingerichtet ist, wobei die Wanddurchführung (2) aufweist:
- ein Formteil (12), welches in die Öffnung (10) einsetzbar ist, wobei das Formteil (12) einen Grundkörper (14) aufweist mit einem ersten Endabschnitt (16) und einem gegenüberliegenden zweiten Endabschnitt (18),
und wobei der Grundkörper (14) wenigstens zwei von dem ersten Endabschnitt (16) zu dem zweiten Endabschnitt (18) verlaufende Leitungs-Durchführungen (20, 21) aufweist, welche dazu eingerichtet sind, jeweils eine Leitung (6) des Wärmeübertrager-Systems (4) aufzunehmen,
- eine Verschlusseinheit (22), welche zur Anlage an dem Wandabschnitt (8) ausgebildet ist wobei die Verschlusseinheit (22) Durchgänge (24) für die durch die Wanddurchführung (2) hindurchzuführenden Leitungen (6) aufweist,
wobei das Formteil (12) aus einem geschäumten oder expandierten Material (28) ausgebildet ist,
**dadurch gekennzeichnet, dass** an dem zweiten Endabschnitt (18) ein Verschlussflansch (26) angeformt ist, welcher zur Anlage an dem Wandabschnitt (8) gegenüber von der Verschlusseinheit (22) ausgebildet ist

2. Wanddurchführung (2) nach Anspruch 1,
wobei die Verschlusseinheit (22) zur Anlage an dem Wandabschnitt (8) ausgebildet und
mit dem Formteil (12) an dem ersten Endabschnitt (16) verbindbar ist.

3. Wanddurchführung (2) nach Anspruch 1,
wobei die Verschlusseinheit (22) beabstandet zu dem Formteil (12) angeordnet ist, insbesondere wobei ein Zwischenraum zwischen der Verschlusseinheit (22) und dem Formteil (12) zumindest teilweise mit einem Füllmaterial gefüllt ist.

4. Wanddurchführung (2) nach einem der vorstehenden Ansprüche,
wobei das geschäumte oder expandierte Material (28) ausgewählt ist aus der Liste umfassend:
- Polystyrol, insbesondere expandiertes Polystyrol,
- Polypropylen,
- Polyurethan,
- Schaumglas.

5. Wanddurchführung (102) nach einem der vorstehenden Ansprüche,
wobei das Formteil (112) wenigstens zwei Teilabschnitte (164, 166) aufweist, die das Formteil (112) entlang seiner Längsachse teilen.

6. Wanddurchführung (2) nach einem der vorstehenden Ansprüche,
wobei der Grundkörper (14) wenigstens eine, insbesondere zwei, von dem ersten Endabschnitt (16) zum zweiten Endabschnitt (18) verlaufende Stromleitungs-Durchführungen (30, 32) aufweist, welche dazu eingerichtet sind, jeweils eine stromführende Leitung des Wärmeübertrager-Systems (4) aufzunehmen und/oder
wobei der Grundkörper (14) wenigstens eine von dem ersten Endabschnitt (16) zum zweiten Endabschnitt (18) verlaufende Datenleitungs-Durchführung (34, 36) aufweist, welche dazu eingerichtet ist, eine Datenleitung des Wärmeübertrager-Systems (4) aufzunehmen.

7. Wanddurchführung (2) nach einem der vorstehenden Ansprüche,
wobei der Grundkörper (14) eine Längsachse (38) aufweist, welche sich von dem ersten Endabschnitt (16) zu dem zweiten Endabschnitt (18) erstreckt, und wobei der Grundkörper (14) entlang der Längsachse (38) einen zylindrischen Querschnitt aufweist, und/oder wobei der Grundkörper (14) wenigstens eine Markierung (40) zur Längenanpassung des Formteils (12) aufweist.

8. Wanddurchführung (2) nach einem der vorstehenden Ansprüche,
wobei wenigstens eine, insbesondere sämtliche der Durchführungen (20, 21, 30, 32, 34, 36) einen umlaufenden Zentriersteg (42) oder mehrere axial verlaufende Zentrierstege (42) zur Zentrierung der Leitungen (6) aufweisen.

9. Wanddurchführung (2) nach einem der vorstehenden Ansprüche,
mit einem Dichtmittel (44), welches in einem sich radial zwischen dem Grundkörper (14) und der Öffnung (10) in dem Gebäude-Wandabschnitt (8) erstreckenden Zwischenraum (46) angeordnet ist,
wobei das Dichtmittel (44) insbesondere als Quellband oder Montageschaum oder Dickschichtkleber oder Schaumklebeband ausgebildet ist.

10. Wanddurchführung (2) nach einem der vorstehenden Ansprüche,
wobei die Verschlusseinheit (22) an der dem Wandabschnitt (8) zugewandten Seite eine Dichtung (48) aufweist, insbesondere eine Zellkautschuk-Dichtung und/oder wobei die Verschlusseinheit (22) eine Acrylplatte (52) oder ein Spritzgussteil aufweist oder daraus ausgebildet ist.

11. Wanddurchführung (2) nach einem der vorstehenden Ansprüche,
wobei die Verschlusseinheit (22) einen Flansch (56), vorzugsweise einen umlaufenden Flanschkragen (56), zur Anlage an dem Wandabschnitt (8) aufweist.

12. Wanddurchführung (2, 102) nach einem der vorstehenden Ansprüche,
wobei die Verschlusseinheit (22) eine erste Verschlusseinheit (22) ist, und wobei die Wanddurchführung (2) eine zweite Verschlusseinheit (58) aufweist, welche zur Anlage an dem Wandabschnitt (8) ausgebildet ist und mit dem Formteil (12) an dem zweiten Endabschnitt (18) verbindbar ist, wobei die zweite Verschlusseinheit (58) Durchgänge (24) für die durch die Wanddurchführung (2) hindurchzuführenden Leitungen (6) aufweist.

13. Wanddurchführung (2) nach einem der vorstehenden Ansprüche,
wobei die erste Verschlusseinheit (22) und/oder die zweite Verschlusseinheit (58) wenigstens ein Rastmittel (60), insbesondere einen Rasthaken (60) aufweist, welches dazu eingerichtet ist, in das Formteil (12) einzudringen und eine rastende Verbindung mit dem Formteil (12) einzugehen und/oder
wobei wenigstens eine der Verschlusseinheiten (22, 58) mit dem Formteil (12) mittels Dämmstoffdübeln (68), die an dem jeweiligen Endabschnitt (16, 18) in das Formteil (12) geschraubt sind, verspannt ist.

14. Wanddurchführung (102) nach Anspruch 12,
wobei die erste Verschlusseinheit (22) und/oder die zweite Verschlusseinheit (58) mindestens ein Führungsrohr (160) aufweisen, und das Formteil (12) einen korrespondierenden Aufnahmekanal (162) für das Führungsrohr (160), insbesondere wobei das Führungsrohr (160) mit wenigstens einem Durchgang (124) für die durch die Wanddurchführung (102) hindurchzuführende Leitung korrespondiert und/oder der Aufnahmekanal (162) mit einer der Leitungs-Durchführungen (120, 121).

15. Wanddurchführung (2) nach einem der vorstehenden Ansprüche,
wobei wenigstens eine der Verschlusseinheiten (22, 58) und/oder der Verschlussflansch (26) eine Entlüftungsöffnung (54) zur Entlüftung der Öffnung (10) aufweisen und/oder wobei das Formteil (12) in eine Richtung von dem ersten Endabschnitt (16) zu dem zweiten Endabschnitt (18) mehrteilig ausgebildet ist, insbesondere zweiteilig oder dreiteilig.

16. Verwendung einer Wärmeübertrager-Wanddurchführung (2) nach einem der Ansprüche 1-15 zum Durchführen von Leitungen (6) eines Wärmeübertrager-Systems (4), insbesondere eines Wärmepumpensystems, durch eine oberirdische Öffnung (10) in einem Wandabschnitt (8).

## Claims

1. A heat exchanger wall bushing (2, 102) for the above-ground installation of a heat exchanger system (4) with several lines (6), wherein the wall bushing (2) is configured to feed the lines (6) through an opening (10) of a wall section (8), wherein the wall bushing (2) has:
- a shaped part (12), which can be inserted into the opening (10), wherein the shaped part (12) has a base body (14) with a first end section (16) and an opposite second end section (18),
and wherein the base body (14) has at least two line bushings (20, 21), which run from the first end section (16) to the second end section (18) and which are configured to each receive a line (6) of the heat exchanger system (4),
- a closure unit (22), which is formed for abutting against the wall section (8), wherein the closure unit (22) has passages (24) for the lines (6), which are to be fed through the wall bushing (2),
wherein the shaped part (12) is made of a foamed or expanded material (28),
**characterized in that** a closure flange (26), which is formed for abutment against the wall section (8) opposite the closure unit (22), is integrally molded to the second end section (18).

2. The wall bushing (2) according to claim 1,
wherein the closure unit (22) is formed for abutment against the wall section (8) and can be connected with the shaped part (12) to the first end section (16).

3. The wall bushing (2) according to claim 1,
wherein the closure unit (22) is arranged spaced apart from the shaped part (12), in particular wherein an intermediate space between the closure unit (22) and the shaped part (12) is at least partly filled with a filler material.

4. The wall bushing (2) according to one of the preceding claims,
wherein the foamed or expanded material (28) is selected from the list comprising:
- polystyrene, in particular expanded polystyrene,
- polypropylene,
- polyurethane,
- foam glass.

5. The wall bushing (102) according to one of the preceding claims,
wherein the shaped part (112) has at least two partial sections (164, 166), which divide the shaped part (112) along its longitudinal axis.

6. The wall bushing (2) according to one of the preceding claims,
wherein the base body (14) has at least one, in particular two, power line bushings (30, 32), which run from the first end section (16) to the second end section (18) and which are configured to each receive a current-carrying line of the heat exchanger system (4) and/or wherein the base body (14) has at least one data line bushing (34, 36), which runs from the first end section (16) to the second end section (18) and which is configured to receive a data line of the heat exchanger system (4).

7. The wall bushing (2) according to one of the preceding claims,
wherein the base body (14) has a longitudinal axis (38), which extends from the first end section (16) to the second end section (18) and wherein the base body (14) has a cylindrical cross section along the longitudinal axis (38), and/or wherein the base body (14) has at least one marking (40) for the length adaptation of the shaped part (12).

8. The wall bushing (2) according to one of the preceding claims,
wherein at least one bushing, in particular all of the bushings (20, 21, 30, 32, 34, 36) have a circumferential centering web (42) or several axially running centering webs (42) for centering the lines (6).

9. The wall bushing (2) according to one of the preceding claims,
with a sealing means (44), which is arranged in an intermediate space (46) extending radially between the base body (14) and the opening (10) in the building wall section (8),
wherein the sealing means (44) is in particular formed as swelling tape or assembly foam or thick film adhesive or adhesive foam tape.

10. The wall bushing (2) according to one of the preceding claims,
wherein the closure unit (22) on the side facing the wall section (8) has a seal (48), in particular a cellular rubber seal and/or
wherein the closure unit (22) has an acrylic plate (52) or an injection molded part or is formed therefrom.

11. The wall bushing (2) according to one of the preceding claims,
wherein the closure unit (22) has a flange (56), preferably a circumferential flange collar (56), for abutment against the wall section (8).

12. The wall bushing (2, 102) according to one of the preceding claims, wherein the closure unit (22) is a first closure unit (22), and wherein the wall bushing (2) has a second closure unit (58), which is formed for abutment against the wall section (8) and which can be connected to the shaped part (12) on the second end section (18), wherein the second closure unit (58) has passages (24) for the lines (6), which are to be fed through the wall bushing (2).

13. The wall bushing (2) according to one of the preceding claims,
wherein the first closure unit (22) and/or the second closure unit (58) have at least one locking means (60), in particular a locking hook (60), which is configured to penetrate into the shaped part (12) and to enter into a locking connection with the shaped part (12) and/or
wherein at least one of the closure units (22, 58) is connected to the shaped part (12) by means of insulation material anchors (68), which are screwed into the shaped part (12) on the respective end section (16, 18).

14. The wall bushing (102) according to claim 12,
wherein the first closure unit (22) and/or the second closure unit (58) have at least one guide tube (160), and the shaped part (12) has a corresponding receiving channel (162) for the guide tube (160), in particular wherein the guide tube (160) corresponds to at least one passage (124) for the line, which is to be fed through the wall bushing (102) and/or the receiving channel (162) corresponds to one of the line bushings (120, 121).

15. The wall bushing (2) according to one of the preceding claims,
wherein at least one of the closure units (22, 58) and/or the closure flange (26) have a ventilation opening (54) for ventilating the opening (10) and/or
wherein the shaped part (12) is formed in several pieces, in particular in two pieces or three pieces, in a direction from the first end section (16) to the second end section (18).

16. Use of a heat exchanger wall bushing (2) according to one of claims 1-15 for feeding lines (6) of a heat exchanger system (4), in particular of a heat pump system, through an above-ground opening (10) in a wall section (8).

## Revendications

1. Traversée de paroi pour échangeur de chaleur (2, 102) pour l'installation aérienne d'un système d'échangeur de chaleur (4) avec plusieurs lignes (6), dans laquelle la traversée de paroi (2) est mise au point pour faire passer les lignes (6) à travers une ouverture (10) d'une section de paroi (8), dans laquelle la traversée de paroi (2) présente :
- une pièce moulée (12), qui peut être insérée dans l'ouverture (10), dans laquelle la pièce moulée (12) présente un corps de base (14) avec une première section d'extrémité (16) et une seconde section d'extrémité (18) opposée,
et dans laquelle le corps de base (14) présente au moins deux traversées pour ligne (20, 21) s'étendant depuis la première section d'extrémité (16) à la seconde section d'extrémité (18), qui sont mises au point pour recevoir respectivement une ligne (6) du système d'échangeur de chaleur (4),
- une unité de fermeture (22), qui est réalisée pour être en appui sur la section de paroi (8), dans laquelle l'unité de fermeture (22) présente des passages (24) pour les lignes (6) devant être guidées à travers par la traversée de paroi (2),
dans laquelle la pièce moulée (12) est réalisée à partir d'un matériau (28) moussé ou expansé,
**caractérisée en ce qu'**une bride de fermeture (26) est formée sur la seconde section d'extrémité (18), laquelle est formée pour être en appui sur la section de paroi (8) en regard de l'unité de fermeture (22).

2. Traversée de paroi (2) selon la revendication 1,
dans laquelle l'unité de fermeture (22) est réalisée pour être en appui sur la section de paroi (8) et peut être reliée à la pièce moulée (12) sur la première section d'extrémité (16).

3. Traversée de paroi (2) selon la revendication 1,
dans laquelle l'unité de fermeture (22) est disposée à distance de la pièce moulée (12), en particulier dans laquelle un espace intermédiaire entre l'unité de fermeture (22) et la pièce moulée (12) est au moins en partie rempli d'un matériau de remplissage.

4. Traversée pour paroi (2) selon l'une quelconque des revendications précédentes,
dans laquelle le matériau (28) moussé ou expansé est choisi dans la liste comprenant :
- le polystyrène, en particulier le polystyrène expansé,
- le polypropylène,
- le polyuréthane,
- du verre mousse.

5. Traversée de paroi (102) selon l'une quelconque des revendications précédentes,
dans laquelle la pièce moulée (112) présente au moins deux sections partielles (164, 166) qui divisent la pièce moulée (112) le long de son axe longitudinal.

6. Traversée de paroi (2) selon l'une quelconque des revendications précédentes,
dans laquelle le corps de base (14) présente au moins un, en particulier deux, traversées pour ligne de courant (30, 32) s'étendant depuis la première section d'extrémité (16) à la seconde section d'extrémité (18), qui sont mises au point pour recevoir respectivement une ligne de guidage de courant du système d'échangeur de chaleur (4) et/ou
dans laquelle le corps de base (14) présente au moins une traversée pour ligne de données (34, 36) s'étendant depuis la première section d'extrémité (16) à la seconde section d'extrémité (18), laquelle est mise au point pour recevoir une ligne de données du système d'échangeur de chaleur (4).

7. Traversée de paroi (2) selon l'une quelconque des revendications précédentes,
dans laquelle le corps de base (14) présente un axe longitudinal (38) qui s'étend depuis la première section d'extrémité (16) à la seconde section d'extrémité (18), et dans laquelle le corps de base (14) présente une section transversale cylindrique le long de l'axe longitudinal (38), et/ou dans laquelle le corps de base (14) présente au moins un repère (40) pour l'adaptation en longueur de la pièce moulée (12).

8. Traversée de paroi (2) selon l'une quelconque des revendications précédentes,
dans laquelle au moins une, en particulier l'ensemble des traversées (20, 21, 30, 32, 34, 36), présente(nt) une nervure de centrage (42) périphérique ou plusieurs nervures de centrage (42) s'étendant axialement pour le centrage des lignes (6).

9. Traversée de paroi (2) selon l'une quelconque des revendications précédentes,
avec un produit d'étanchéité (44) qui est disposé dans un espace intermédiaire (46) s'étendant radialement entre le corps de base (14) et l'ouverture (10) dans la section de paroi de bâtiment (8),
dans laquelle le produit d'étanchéité (44) est réalisé en particulier sous la forme d'un ruban gonflant ou de mousse de montage ou de colle à couche épaisse ou de ruban adhésif en mousse.

10. Traversée de paroi (2) selon l'une quelconque des revendications précédentes,
dans laquelle l'unité de fermeture (22) présente un joint d'étanchéité (48) sur le côté tourné vers la section de paroi (8), en particulier un joint d'étanchéité en caoutchouc cellulaire et/ou
dans laquelle l'unité de fermeture (22) présente une plaque acrylique (52) ou une pièce moulée par injection ou est réalisée à partir de celles-ci.

11. Traversée de paroi (2) selon l'une quelconque des revendications précédentes,
dans laquelle l'unité de fermeture (22) présente une bride (56), de préférence un collet de bride périphérique (56), pour venir en appui sur la section de paroi (8).

12. Traversée de paroi (2, 102) selon l'une quelconque des revendications précédentes,
dans laquelle l'unité de fermeture (22) est une première unité de fermeture (22), et dans laquelle la traversée de paroi (2) présente une deuxième unité de fermeture (58) qui est réalisée pour être en appui sur la section de paroi (8) et peut être reliée à la pièce moulée (12) sur la seconde section d'extrémité (18), dans laquelle la deuxième unité de fermeture (58) présente des passages (24) pour les lignes (6) devant être guidées à travers la traversée de paroi (2).

13. Traversée de paroi (2) selon l'une quelconque des revendications précédentes,
dans laquelle la première unité de fermeture (22) et/ou la deuxième unité de fermeture (58) présentent au moins un moyen d'encliquetage (60), en particulier un crochet d'encliquetage (60), qui est mis au point pour pénétrer dans la pièce moulée (12) et engager une liaison par encliquetage avec la pièce moulée (12) et/ou
dans laquelle au moins l'une des unités de fermeture (22, 58) est serrée avec la pièce moulée (12) au moyen de chevilles isolantes (68) qui sont vissées dans la pièce moulée (12) sur la section d'extrémité (16, 18) respective.

14. Traversée de paroi (102) selon la revendication 12,
dans laquelle la première unité de fermeture (22) et/ou la deuxième unité de fermeture (58) présentent au moins un tube de guidage (160), et la pièce moulée (12) un canal de réception (162) correspondant pour le tube de guidage (160), en particulier dans laquelle le tube de guidage (160) correspond à au moins un passage (124) pour la ligne devant être guidée à travers la traversée de paroi (102) et/ou le canal de réception (162) correspond à l'une des traversées pour ligne (120, 121).

15. Traversée de paroi (2) selon l'une quelconque des revendications précédentes,
dans laquelle au moins l'une des unités de fermeture (22, 58) et/ou la bride de fermeture (26) présente(nt) une ouverture d'aération (54) pour l'aération de l'ouverture (10) et/ou dans laquelle la pièce moulée (12) est réalisée en plusieurs parties dans une direction allant depuis la première section d'extrémité (16) à la seconde section d'extrémité (18), en particulier en deux parties ou en trois parties.

16. Utilisation d'une traversée de paroi pour échangeur de chaleur (2) selon l'une quelconque des revendications 1 à 15 pour guider des lignes (6) d'un système d'échangeur de chaleur (4), en particulier d'un système de pompe à chaleur, à travers une ouverture aérienne (10) dans une section de paroi (8).
